# EUROPÄISCHE PATENTANMELDUNG

(11) **EP 1 028 577 A2**
(43) Veröffentlichungstag der Anmeldung: **16.08.2000**
(21) Anmeldenummer: 00107819.5
(22) Anmeldetag: 22.07.1992
(51) Int. Cl.: H04M 1/72, H04N 7/14

(54) **Funktelefon mit Videoaufnahmeeinrichtung und Videowiedergabeeinrichtung**

(30) Priorität: 07.08.1991 DE 4126105
(62) Teilanmeldung aus: 92112526.6
(71) Anmelder: ALCATEL, 75008 Paris (FR)
(72) Erfinder: Ohnsorge, Horst Dr., 89143 Blaubeuren (DE)
(74) Vertreter: Zinsinger, Norbert

(57) **Zusammenfassung**

Das Funktelefon ist mit einer Videoaufnahmeeinrichtung (7) und einer - wiedergabeeinrichtung (6) ausgerüstet. Audio- und Videoübertragung erfolgen über zwei Kanäle im mobilen Funknetz oder im ISDN.

## Beschreibung

Die Erfindung betrifft ein Funktelefon.

Ein derartiges Funktelefon ist z.B. in der Zeitschrift "Mobilfunk" 1 (1988), Heft 1, Seite 14 beschrieben. Das Gerät hat ein quaderförmiges Gehäuse von Handapparatgröße, in dem eine Sende- und Empfangseinrichtung, Wähl- und Funktionstasten, ein Anzeigenfeld, elektroakustische Wandler, eine Stromversorgung in Form von aufladbaren Akkumulatoren sowie eine hochintegrierte, elektronische Schaltung untergebracht sind. An der Oberseite des Gehäuses ist eine Antenne anschraubbar, außerdem ist dort ein Schlitz zum Einführen einer Berechtigungskarte in einen eingebauten Kartenleser vorhanden. Die Wähltasten bilden eine vollalphanumerische Tastatur, die Elektronik enthält zahlreiche Speicherplätze für Rufnummern und -namen. Für Gebührenanzeige und verschiedene andere Leistungsmerkmale bietet das Gerät Menü-Funktionen. Zubehör für tragbaren als auch fahrbaren Einsatz im Kraftfahrzeug, wie z.B. Fahrzeug halterung, Tragetasche, Tischladegerät, Freisprecheinrichtung, ermöglicht die Nutzung aller Vorteile eines Mobilfunknetzes.

Ferner sind Funktelefone für geringe Reichweite bekannt sogenannte schnurlose Telefone, die eine an das Fernmeldenetz angeschlossene Feststation und ein schnurloses Handgerät haben, wobei letzteres alle Bedienungstasten und einen Akkumulator enthält, z.B. "sinus 1" oder "sinus 2" der Deutschen Bundespost (Prospekte FTZ L 16-4, Best. Nr. 210A bzw. 210B). Die Feststation ist mit einer Ladevorrichtung ausgerüstet, die bei aufgelegtem Handgerät den Akkumulator auflädt, der voll aufgeladen eine mehrstündige Unabhängigkeit von der Feststation ermöglicht. Der Funkkontakt zwischen Feststation und Handgerät erfolgt über zahlreiche Kanäle im 900-MHz-Bereich.

Der Erfindung liegt die Aufgabe zugrunde, den Anwendungsbereich und Komfort eines Funktelefones weiter zu verbessern. Gelöst wird diese Aufgabe durch die im Anspruch 1 angegebenen Merkmale, Weiterbildungen sind den Unteransprüchen zu entnehmen. Durch die Erweiterung des Funktelefones auf den Videobereich kann bei Bedarf der mündlichen Kommunikation die bildliche hinzugefügt werden, wodurch die Informationsübermittlung wesentlich verbessert und erleichtert werden kann.

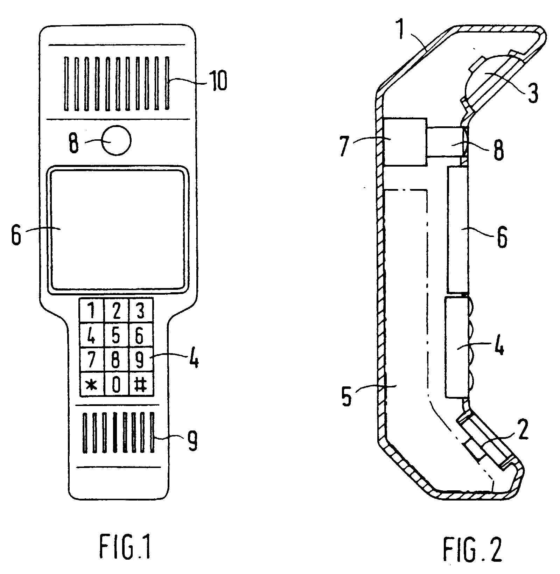

Die Erfindung wird anhand eines Ausführungsbeispieles beschrieben, das in der zugehörigen Zeichnung dargestellt ist. Deren Figuren 1 und 2 zeigen ein mobiles Funktelefon mit Videoeinrichtung in Form eines Handgerätes in Vorderansicht und in einem schematisierten Längsschnitt.

Das mobile Funkvideofon ist, wie bei Funktelefonen üblich, als Handgerät ausgebildet. Sein Gehäuse 1 hat deshalb eine gut zu handhabende Form, die der eines Telefon-Handapparates ähnlich ist. Wie aus Fig. 2 ersichtlich ist, können die beiden Enden des Gehäuses, in denen hinter entsprechenden Schalldurchlässen 9 und 10 die akustischen Wandler 2 und 3 untergebracht sind, nach innen geneigt sein, um eine gute Verständigung beim unmittelbaren Sprechen zu gewährleisten. Das Gehäuse kann jedoch auch gestreckte Form haben. Das Gerät ist mit einer Freisprecheinrichtung ausgerüstet. Wie üblich sind folgende Teile in dem Gehäuse 1 angeordnet: Mikrofon 2, Lautsprecher 3, dazwischen, oberhalb des Mikrofons 2, eine Wähltastatur 4 und, nach Bedarf, weitere Funktionstasten (nicht dargestellt), sowie die elektronische Schaltung 5 des Gerätes, die durch strichpunktierte Linien angedeutet ist. Die Tasten können auch auf der anderen, den Schalldurchlässen 9 und 10 abgewandten Seite (Außenseite) des Gehäuses 1 angeordnet sein.

Außerdem ist über der Wähltastatur 4 ein flaches LC-Display als Videowiedergabeeinrichtung 6, angebracht, das zumindest in diesem Teil die Breite des Gehäuses 1 bestimmt. Wiederum darüber ist eine kleine Kamera 7 mit Weitwinkelobjektiv 8 als Videoaufnahmeeinrichtung eingebaut. Damit steht ein Funkvideofon für Bild- und Tonkommunikation zur Verfügung, mit dem, wie mit den mobilen Telefonen, größtmögliche Unabhängigkeit und Beweglichkeit gegeben ist, gepaart nun auch mit visuellem Komfort.

Für die Kommunikation wird im ISDN je ein B-Kanal für die Audio- und für die Video-Übertragung benutzt. Im Mobilfunknetz C geschieht die Übertragung über zwei Kanäle mit einer Übertragungsrate von jeweils 32 Kbit/s. Alternativ kann für den Einsatz im Mobilfunknetz Audio mit 8 Kbit/s und Video mit 24 Kbit/s übertragen werden, bis höhere Bitraten zur Verfügung stehen.

## Patentansprüche

1. Als Handgerät ausgebildetes Funktelefon mit einem Handapparat-Gehäuse (1), das mit hinter Schalldurchlässen (9, 10) eingesetzten elektroakustischen Wandlern (2, 3) ausgerüstet ist,
**dadurch gekennzeichnet**, daß weiter eine Videoaufnahmeeinrichtung (7), eine Videowiedergabeeinrichtung (6) und eine elektronische Schaltung (5) zur Bild- und Tonkommunikation über Funk innerhalb des Handapparat-Gehäuses (1) angeordnet sind, daß das Funktelefon weiter mit einer Freisprecheinrichtung ausgerüstet ist, daß die Videoaufnahmeeinrichtung (7) mit einem Weitwinkelobjektiv (8) ausgestattet ist und daß die Videoaufnahmeeinrichtung (1) und die Videowiedergabeeinrichtung (6) in der Vorderseite des HandapparatGehäuses angeordnet sind.

2. Funktelefon nach Anspruch 1, dadurch gekennzeichnet, daß die elektronische Schaltung (5) zur Bild- und Tonkommunikation über Funk weiter so ausgestaltet ist, daß sie Audio und Video parallele über Funk überträgt, so daß einem Benutzer des Funktelefons eine gleichzeitige Bild- und Tonkommunikation ermöglicht wird.

3. Funktelefon nach einem der oberen Ansprüche, dadurch gekennzeichnet, daß die elektronische Schaltung (5) zur Bild- und Tonkommunikation über Funk weiter so ausgestaltet ist, daß sie eine Bild- und Tonkommunikation über ein Mobilfunknetz ermöglicht.

4. Funktelefon nach Anspruch 3, dadurch gekennzeichnet daß die elektronische Schaltung (5) zur Bild- und Tonkommunikation über Funk weiter so ausgestaltet ist, daß Audio mit 8 Kbit/s und Video mit 24 Kbit/s übertragen werden.

5. Funktelefon nach Anspruch 3, dadurch gekennzeichnet daß die elektronische Schaltung (5) zur Bild- und Tonkommunikation über Funk weiter so ausgestaltet ist, daß die Audio- und Video-Übertragung über zwei Funkkanäle mit je einer Übertragungsrate von 32 Kbit/s erfolgt.

6. Funktelefon nach Anspruch 2, dadurch gekennzeichnet, daß die elektronische Schaltung (5) zur Bild- und Tonkommunikation über Funk so ausgestaltet ist die Kommunikation über zwei ISDN B-Kanäle erfolgt, wobei je einer für die Audio- und einer für die Video-Übertragung benutzt wird.

7. Funktelefon nach einem der oberen Ansprüche , dadurch gekennzeichnet, daß die Videowiedergabeeinrichtung (6) ein LC-Display ist.

8. Funktelefon nach einem der oberen Ansprüche , dadurch gekennzeichnet, daß die Freisprecheinrichtung innerhalb des HandapparatGehäuses (1) angeordnet ist.

9. Funktelefon nach einem der oberen Ansprüche, dadurch gekennzeichnet, daß die Schalldurchlässe (9, 10) in der Vorderseite des Handapparot-Gehäuses (1) angeordnet ist.

10. Funktelefon nach einem der oberen Ansprüche, dadurch gekennzeichnet, daß die Schalldurchlässe (9, 10) an gegenüberliegenden Enden des Handopparat-Gehäuses (1) angeordnet sind.

11. Funktelefon nach einem der oberen Ansprüche, dadurch gekennzeichnet, daß das Handapparat-Gehäuse (1) mit einer Wähltastatur (4) ausgerüstet ist und die Wähltastatur (4) in der Vorderseite des Handapparat-Gehäuses angeordnet ist.

12. Funktelefon nach einem der oberen Ansprüche, dadurch gekennzeichnet, daß die Videoaufnahmeeinrichtung (7) oberhalb der Videowiedergabeeinrichtung (6) angeordnet ist.

13. Funktelefon nach einem der oberen Ansprüche, dadurch gekennzeichnet, daß die Videowiedergabeeinrichtung (6) zwischen den Schalldurchlässen (9, 10) angeordnet ist.
